# EUROPÄISCHE PATENTSCHRIFT

(11) **EP 1 665 136 B1**
(45) Veröffentlichungstag und Bekanntmachung des Hinweises auf die Patenterteilung: **04.07.2007**
(21) Anmeldenummer: 04764906.6
(22) Anmeldetag: 07.09.2004
(51) Int. Cl.: G06K 17/00, G06K 9/64, G06K 9/66

(54) **VERFAHREN ZUM ERZEUGEN UND/ODER AKTUALISIEREN VON LERN- UND/ODER TESTSTICHPROBEN**
METHOD FOR PRODUCING AND/OR UPDATING LEARNING AND/OR RANDOM TEST SAMPLES
PROCEDE POUR PRODUIRE ET/OU METTRE A JOUR DES ECHANTILLONS D'APPRENTISSAGE ET/OU DES ECHANTILLONS ALEATOIRES D'ESSAI

(30) Priorität: 26.09.2003 DE 10345047
(43) Veröffentlichungstag der Anmeldung: 07.06.2006
(73) Patentinhaber: SIEMENS AKTIENGESELLSCHAFT, 80333 München (DE)
(72) Erfinder: BAYER, Thomas, 78315 Radolfzell (DE); ZIER, Peter, 78333 Stockach (DE)
(86) Internationale Anmeldenummer: PCT/EP2004/009963
(87) Internationale Veröffentlichungsnummer: WO 2005/038701

(56) Entgegenhaltungen:
- US-A- 5 770 841
- US-A- 6 148 106
- US-A1- 2002 029 153
- US-A1- 2003 099 401
- US-B1- 6 421 463
- US-B1- 6 557 758

## Beschreibung

Die Erfindung betrifft ein Verfahren zum Erzeugen und/oder Aktualisieren von Lern- und/oder Teststichproben für die Optimierung von automatischen Lesern für Sendungsaufschriften mit adaptiven Klassifikatoren.

Für den Prozess der postalischen Automatisierung spielt neben der eigentlichen Sortiermaschine das Lesen der Adressen eine zentrale Rolle. Erst wenn die postalische Adresse einer Sendung ermittelt worden ist, kann diese Postsendung in einer Sortiermaschine in das richtige Fach sortiert werden.

Der Verarbeitungsprozess zum Lesen einer Adresse besteht aus einer Reihe von adaptiven Verarbeitungsschritten, die in Bildaufnahme, Lokalisieren des Adressblocks, Segmentierung des Adressblocks in Zeilen und Wörter, Zeichen- und/oder Worterkennung und abschließender Abgleich mit einer Adressdatenbank aufgegliedert werden kann.

Wenn die Adressinformation nicht automatisch vom Lesesystem ermittelt worden ist, oder nur Teile der notwendigen Informationen gelesen werden, wird diese Sendung zu einem manuellen Bearbeitungsplatz gesendet (Videokodieren). Hier wird der oder die fehlenden Adresseinträge durch Videokodierkräfte manuell eingegeben. Solch eine Adresserfassung ist in US-A-5 770 841 beschrieben.

Das Ziel eines jeden Adresslesesystems ist es deshalb, sehr hohe Leserate zu erreichen, um den manuellen Aufwand beim Videokodieren möglichst klein zu halten. Um diese hohe automatisierte Leserate zu erreichen, ist zum Adaptieren an die zu lesenden Sendungsaufschriften eine Menge von Domänenwissen für jeden einzelnen Verarbeitungsschritt notwendig.

Ein großer Anteil der in einem Adressleser auftretenden Verarbeitungsschritte wie z.B. Zeichen-, Wort-, und Schriftart-Erkennung basiert auf adaptiven Klassifikationsverfahren. Das allen adaptiven Verfahren gemeinsame Grundprinzip ist das Lernen von zuvor gesammelten Mustern, deren Eigenschaften in quantifizierbare Merkmals- oder Featuresätze abgebildet werden. Diese erlauben im weiteren Verlauf Rückschlüsse auf die Klassenzugehörigkeit. Deshalb kommt es bei adaptiven Verfahren grundsätzlich zu zwei Arbeitsphasen:
a) der Optimierungsphase, bestehend vorzugsweise aus Lern- und Testphase,
b) der Kannphase.

Während der Optimierungsphase muss zu jedem Merkmalssatz eines Musters, das je nach Aufgabe z.B. einem Zeichen, einem Wort oder einer Adresse besteht, seine Bedeutung in Form der Sollinformation hinzugefügt werden, damit die Bestimmungsgrößen des Klassifikationssystems optimal eingestellt werden können. Diese Phase, in der sich das System auf die optimale Parameter-Einstellung hinbewegt, läuft vorzugsweise in zwei Stufen ab, wobei in der Lernphase die Grundeinstellung der Parameter vorgenommen wird, während in der Testphase eine Feinjustierung der Parameter erfolgt. In der Kannphase wird dann nur noch der Merkmalssatz eines Musters benötigt, aus dem das Klassifikationssystem nach Maßgabe der abgespeicherten Parameter die Klassenzugehörigkeit ableitet.

Der größte entwicklungstechnische Aufwand zur Realisierung eines Klassifikationssystems steckt in der Lern- und Testphase, die jeweils wiederum in zwei Hauptaktivitäten aufgeteilt werden kann. Zunächst einmal muss eine Stichprobe präpariert werden, die die Erkennungsaufgabe hinreichend gut repräsentiert. Dann erfolgt die eigentliche Adaption des Klassifikationssystems, die sich je nach Klassifikationsmethode und Klassifikatordesign auf die Optimierung der zu Grunde liegenden Bestimmungsgrößen wie z.B. Optimierung der Klassifikatorkoeffizienten beim Polynomklassifikator, Optimierung der Gewichtsfaktoren beim Neuronalen Netz oder der Auswahl der effizientesten Referenzvektoren beim Nächstnachbar-Klassifikator konzentriert.

Während der zweite Aspekt der Lern- und Testphase weitgehend automatisiert ablaufen kann, da ihm im allgemeinen wohl definierte mathematische Methoden und Optimierungsverfahren zugrunde liegen, verbirgt sich hinter dem ersten Aspekt ein hoher Aufwand an Planungs-, Recherchier- und Kontrollarbeit, die nicht selten zum eigentlichen Flaschenhals der adaptiven Lösungsmethodik wird.

Zur Zusammenstellung der Stichproben werden nach dem Stand der Technik vor Ort große Mengen von Sendungen (Life-Mail) gesammelt und durch das sogenannte Labeln mit der Sollinformation (Bedeutung der Aufschriften, Layout-Angaben) manuell versehen. Es muss also von einem Bild auf die ursprüngliche, verloren gegangene Sollinformation/Bedeutung rückgeschlossen werden. (Jürgen Schürmann: Pattern Classification, Verlag: John Wiley&Sons, Inc., 1995, Chapter "Introduction Learning", pp. 17 - 21)

Der Vorgang der Zusammenstellung der Stichprobe ist aus verschiedensten Gründen von entscheidender Bedeutung für das automatische Erkennen, da sich ihre Qualität unmittelbar in der Leistungsfähigkeit des nachfolgend adaptierten Klassifikationssystems niederschlägt. Spiegelt die jeweilige Stichprobe die betrachtete Leseaufgabe hinreichend gut wider, wird sich auch in der Kann-Phase eine gute Leseleistung für das breite Spektrum der vorkommenden Muster einstellen. Ist die Stichprobe zu eng selektiert, hat man in der Kannphase auch nur für dieses eingeschränkte Spektrum gute Performance zu erwarten und erreicht nicht die erwartete Performance für den Rest der auftretenden Muster. Dieser Aspekt der hinreichend umfassenden Stichprobe korreliert unmittelbar mit dem Begriff der Repräsentativität einer Stichprobe aus der mathematischen Statistik.

Um eine qualitativ hochwertige und repräsentative Stichprobe zu erhalten, sind eine Reihe von Kriterien zu erfüllen. Grundvoraussetzung für eine gute Lern- und Teststichprobe ist, dass alle zu lernenden Formen einer Musterklasse in ausreichendem Maße vorhanden sind. Schon das ist oft eine gar nicht so leicht zu erfüllende Bedingung, da üblicherweise Aufgabenstellungen aus einer speziellen Anwendung kommen, die nur einen Ausschnitt einer Gesamterkennungsaufgabe darstellt. So haben z.B. im Bereich der Schrifterkennung im postalischen Bereich zum Zeitpunkt einer Klassifikatoradaption gewisse Fonts (Schriftarten), Drucktechniken oder Druckgeräte den Vorzug, die nur einen limitierten Ausschnitt des gesamten Spektrums darstellen. Im Verlaufe der Sendungsaufschriftenleserlebensdauer schieben sich vielleicht andere Fonts und Drucktechniken in den Vordergrund und müssen trotzdem noch hinreichend gut erkannt werden. Dieser Aspekt variiert auch oft beim Einsatz solcher Techniken in verschiedenen nationalen Bereichen. In einem hoch-technisierten Land kommen ganz andere Fonts und Druck-/Schreibgeräte zum Einsatz, als in einem Schwellenland. Dies erfordert eine überaus vorausschauende Zusammenstellung der Stichprobe und möglichst breite Basis für die Mustergenerierung.

Als nächstes muss die einem Muster zugeordnete wahre Bedeutung stimmen. Bekommt nämlich ein adaptives System zu häufig die falsche Klassenzugehörigkeit zu einem Muster zugeordnet, dann wird es auch in der Kannphase vermehrt die falsche Entscheidung treffen, wenn entsprechende Muster vorgeführt werden. Das System ist eben adaptiv und lernt auch Fehlerhaftes, wenn man es ihm anbietet. Je kleiner die Fehlkennungen in der Lern- oder Teststichprobe sind, desto besser ist auch die Leistungsfähigkeit des entwickelten Klassifikationssystems.

Ein weiterer Aspekt hängt direkt mit der Generierung der Merkmalssätze zusammen. Üblicherweise werden.die Merkmalssätze mit den in der vorhandenen Lesesoftware enthaltenen Erkennungsalgorithmen generiert, da die Umfänge meist nicht unerheblich sind (z.B. mehrere tausend Exemplare pro Zeichen bei der Zeichenerkennung), und die Merkmale möglichst realitätsnah sein sollen. Die vorhandenen Algorithmen arbeiten aber durchweg nicht fehlerfrei. So kommt es z.B. bei der Zeichensegmentierung zu fehlerhaften Segmenten, die statt eines Zeichens zum einen nur Zeichenbruchstücke oder zum anderen mehr als ein Zeichen enthalten oder auch manchmal nur Störinformation, die für eine Adaption allesamt nicht nur irrelevant, sondern massiv störend sind, da sie das Klassifikationssystem regelrecht in die Irre führten.

Innerhalb eines Mustererkennungsprozesses laufen außerdem eine ganze Reihe von Verarbeitungsschritten ab, die nicht sichtbar determiniert und erfassbar sind, sondern summarisch statistisch behandelt werden müssen. Dazu zählen z.B. Quantisierungeffekte durch Binarisierungen, Kontrastvariationen durch verschiedenfarbige Papieruntergründe, Rundungseffekte durch unterschiedliche Auflösungs- und Rasterisierungsalgorithmen bei Scan- und Druckgeräten, sowie Scan- und Druckqualitätsschwankungen durch Alter und unterschiedlichen Wartungszustand der Geräte.

Befindet sich der automatische Leser (OCR) im Lesebetrieb/Kannphase, so können sich die Eigenschaften der gelesenen Sendungen ändern, so dass der automatische Leser nicht mehr optimal arbeitet. Damit er den geänderten Bedingungen wieder angepasst werden kann, ist eine neue oder aktualisierte Stichprobe notwendig, mit welcher der Leser optimiert wird, d.h. es muss wieder aufwändig eine Stichprobe wie beschrieben zusammengestellt werden.

Der Erfindung liegt die Aufgabe zugrunde, ein Verfahren zum Erzeugen und/oder Aktualisieren von Lern- und Teststichproben für die Optimierung von automatischen Lesern für Sendungsaufschriften mit adaptiven Klassifikatoren zu schaffen, mit dem während des Lesebetriebes automatisch Lern- und/oder Teststichproben erzeugt und/oder aktualisiert werden.

Erfindungsgemäß wird die Aufgabe durch die Merkmale des Anspruches 1 gelöst.

Durch die Schritte
- Lesen von drahtlos lesbaren und beschreibbaren, auf oder in der Sendung befindlichen Speichereinheiten zusätzlich zum automatischen optischen Lesen,
- wenn aus einer Speichereinheit Zieladressangaben gelesen und identifiziert wurden, abspeichern dieser Daten als Zieladresssolldaten zusammen mit dem aufgenommenen Abbild der Sendungsoberfläche in einer Stichprobendatenbank, ist es möglich, ohne erheblichen manuellen Aufwand Lern- und Teststichproben zur Optimierung automatischer optischer Leser (OCR) zu erstellen.

Vorteilhafte Ausgestaltungen der Erfindung sind in den Unteransprüchen dargestellt.

So ist es vorteilhaft, ein Signal zur Optimierung des automatischen optischen Lesers zu erzeugen, wenn eine bestimmte Anzahl von automatisch erzeugten Einträgen in der Stichprobendatenbank erreicht ist und/oder eine festgelegte Zeitspanne seit der vorherigen Optimierung überschritten wurde.

Vorteilhaft ist es auch, die Speichereinheiten als RFID-Tag auszuführen, d.h. sie werden mittels Funkwellen beschrieben und gelesen.

Da es vorteilhaft ist, wenn die Solldaten in der Stichprobe in Textform vorliegen, kann bei gespeicherten Adressdaten in kodierter Form automatisch der Adresstext aus einem Adresswörterbuch mit allen Varianten ermittelt und in die Stichprobendatenbank eingetragen werden.

Anschließend wird die Erfindung in einem Ausführungsbeispiel anhand der Zeichnung erläutert.

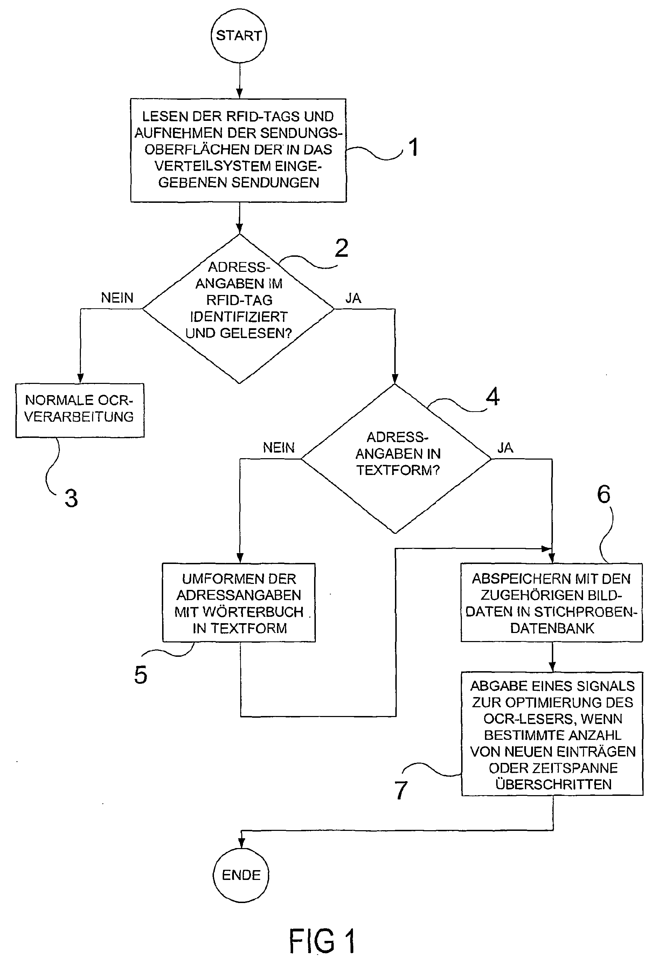

Dabei zeigt
- FIG 1: ein Flussbild des Verfahrensablaufes.

Der Einsatz von RFID-Tags, insbesondere von passiven RFID-Tags, zum Kennzeichnen von Sendungen ist schon seit längerem bekannter Stand der Technik (US 3 750 167, US 6 557 758 B1). Sie dienen dazu, die Sendungen berührungslos mittels Radiowellen zu identifizieren. Zusätzlich zu den Identifikationsdaten können die RFID-Tags auch weitere Daten, wie z.B. Zieladressangaben beinhalten.
Wenn die Sendungen in das Verteilsystem (z.B. Postdienst) gelangen, werden jeweils die die Zieladressen aufweisende Sendungsoberfläche mittels einer Kameraanordnung aufgenommen und abgespeichert, um in einen OCR-Leser die Zieladresse zu lesen. Gleichzeitig erfolgt das drahtlose Lesen des RFID-Tags, der sich in oder auf der betreffenden Sendung befindet 1. Dann wird ermittelt, ob der RFID-Tag Zieladressangaben enthält 2. Wurden aus dem RFID-Tag keine Zieladressangaben identifiziert und gelesen, so erfolgt die normale Weiterverarbeitung der Sendung 3, d.h. OCR-Lesen, Sortieren nach Sortierplänen usw. Enthält der RFID-Tag Adressangaben, wird automatisch festgestellt, ob sie in Textform vorliegen oder nicht 4. Wenn ja, werden die Bilddaten dieser Sendung als Ist-Daten zusammen mit den zugehörigen Zieladressangaben in Textform als Soll-Daten in einer Stichprobendatenbank gespeichert 6, so dass diese Datenbank stets aktuelle Stichproben enthält. Wurden die Zieladressangaben in kodierter Form im RFID-Tag gespeichert, so erfolgt mit Hilfe einer Adressdatenbank die Umwandlung in die Textform 5, die dann in die Stichprobendatenbank eingegeben wird. Dabei werden alle Varianten, die unter der Kodeangabe im Adresswörterbuch gespeichert sind, in die Stichprobendatenbank übernommen. Ist eine bestimmte Anzahl von neuen Einträgen oder eine bestimmte Zeitspanne seit der letzten Optimierung überschritten, wird ein Signal zur erneuten Optimierung des OCR-Lesers abgegeben 7. Auf diese Art und Weise wird also die Lern- und Teststichprobe für die OCR-Leser automatisch und ohne manuellen Aufwand im Lesebetrieb aktuell gehalten.

## Patentansprüche

1. Verfahren zum Erzeugen und/oder Aktualisieren von Lern- und/oder Teststichproben für die Optimierung von automatischen optischen Lesern für Sendungsaufschriften mit adaptiven Klassifikatoren, **gekennzeichnet durch** die Schritte:
- Auslesen des Inhalts von drahtlos lesbaren und beschreibbaren, auf oder in der Sendung befindlichen elektronischen Speichereinheiten zusätzlich zum automatischen optischen Lesen,
- wenn aus einer Speichereinheit Zieladressangaben identifiziert und gelesen wurden, abspeichern dieser Daten als Zieladresssolldaten zusammen mit dem aufgenommenen Abbild der Sendungsoberfläche in einer Stichprobendatenbank.

2. Verfahren nach Anspruch 1, **dadurch gekennzeichnet, dass** ein Signal zur Optimierung des automatischen optischen Lesers erzeugt wird, wenn eine bestimmte Anzahl von automatisch erzeugten Einträgen in der Stichprobendatenbank erreicht ist und/oder eine festgelegte Zeitspanne seit der vorherigen Optimierung überschritten wurde.

3. Verfahren nach Anspruch 1, **dadurch gekenn-zeichnet, dass** die Speichereinheiten als RFID-Tag/Transponder ausgeführt sind.

4. Verfahren nach Anspruch 1, **dadurch gekennzeichnet, dass** bei Vorliegen der Adressdaten in kodierter Form automatisch der Adresstext aus einem Adresswörterbuch mit allen Varianten ermittelt wird und in die Stichprobendatenbank eingetragen wird.

## Claims

1. Method for producing and/or updating learning and/or random test samples, for the optimisation of automatic optical readers for inscriptions on mail with adaptive classifiers, **characterised by** the following steps: -
- reading out of the content of wireless-readable and describable electronic memory units located on or in the mail item in addition to automatic optical reading;
- if destination address information is identified and read from a memory unit, storage of said information as destination address reference information, together with the captured image of the surface of the mail item in a random test sample database.

2. Method according to claim 1, **characterised in that** a signal is created for the optimisation of the automatic optical reader if a certain number of automatically created entries in the random test sample database are achieved and/or if a fixed time interval has been exceeded since the previous optimisation.

3. Method according to claim 1, **characterised in that** the storage units are configured as RFID-tags/transponders.

4. Method according to claim 1, **characterised in that** when the address information is provided in coded form, the address text is automatically determined from an address dictionary comprising all the variants thereof and is entered into the random test sample database.

## Revendications

1. Procédé pour produire et/ou mettre à jour des échantillons d'apprentissage et/ou des échantillons aléatoires d'essai pour l'optimisation de lecteurs optiques automatiques d'inscriptions d'objet postal, comprenant des classificateurs adaptatifs, **caractérisé par** les étapes consistant à :
- lire le contenu d'unités de mémoire électroniques, lisibles et inscriptibles sans fil, se trouvant sur ou dans l'objet postal, en plus de la lecture optique automatique,
- lorsque les indications d'adresse de destination provenant d'une unité de mémoire ont été identifiées et lues, enregistrer ces données en tant que données prévues d'adresse de destination conjointement avec la reproduction détectée de la surface de l'objet postal dans une banque de données d'échantillons aléatoires.

2. Procédé selon la revendication 1, **caractérisé en ce qu'**un signal d'optimisation du lecteur optique automatique est produit lorsqu'un nombre déterminé d'entrées générées automatiquement dans la banque de données d'échantillons aléatoires est atteint et/ou lorsqu'un laps de temps fixé s'est écoulé.

3. Procédé selon la revendication 1, **caractérisé en ce que** les unités de mémoire sont réalisées sous forme d'étiquettes/transpondeurs RFID.

4. Procédé selon la revendication 1, **caractérisé en ce que** dans le cas où des données d'adresse existent sous forme codée, le texte de l'adresse est automatiquement recherché dans un dictionnaire d'adresses avec toutes les variantes et entré dans la banque d'échantillons aléatoires.
